# EUROPEAN PATENT APPLICATION

(11) **EP 3 754 655 A1**
(43) Date of publication of application: **23.12.2020**
(21) Application number: 19181534.9
(22) Date of filing: 20.06.2019
(51) Int. Cl.: G10L 25/63, G10L 15/26, G10L 25/30

(54) **VIDEO ANALYSIS**

(71) Applicant: University of Tartu, 50090 Tartu (EE)
(72) Inventor: ANBARJAFARI, Gholamreza, Tartu 51011 (EE); AKTAS, Kadir, Tartu 51010 (EE)
(74) Representative: Shipp, Nicholas

(57) **Abstract**

A method for processing speech data for a speech event, wherein the speech data comprises a visible component and an audible component. The method comprises identifying a first visible feature within the visible component that corresponds to a predetermined visible speech feature and determining a first time (t₁) corresponding to the occurrence of the first visible feature, during the speech event. The method further comprises determining a measurement of a characteristic of the audible component, at a second time (t₂), during the speech event, which has a pre-defined temporal relationship to the first time (t₁) at which the first visible feature occurred, and using the determined measurement of a characteristic at the second time (t₂), to output an evaluation of an attribute, with which the predetermined visible speech feature is associated.

## Description

### Technical Field

This disclosure relates to a system and method for managing audio-visual data. In particular, although not exclusively, it relates to managing audio-visual data comprising human speech data.

### Background

Many methods exist for processing and analysing human speech and expression, both audio and visual. For example, speech recognition models exist which enable a computer or other device to dynamically recognise and/or learn to understand a human's voice. Speech recognition can be used, for example, to allow a human voice to be used to issue commands to a computer or other machine or device and, for example, to generate electronically written text from spoken words. Facial recognition and feature recognition technologies also exist, for extracting features from static and dynamic visual images. Datasets can be created which link particular facial features or expressions to different respective perceived emotions.

Some existing methods make use of subjective analysis, provided by individuals, for analysing speech, to interpret emotion. For example, CREMA-D (Crowd-sourced Emotional Mutimodal Actors Dataset) is a known dataset of over 7000 clips, recorded by a variety of actors of different ages and sexes. Each clip comprises an actor reciting one of a selection of 12 predefined sentences, each presented using one of six different intended emotions (anger, disgust, fear, happiness, neutrality, and sadness) and four different intended emotion levels (low, medium, high, and unspecified). Volunteer participants viewed the clips, and rated the emotions and emotion levels based on the combined audio-visual presentation, the video alone, and the audio alone.

Other known methods provide sentiment analysis from written data, for statistical purposes. For example, the 'Rotten Tomatoes Movie Review Kaggle Dataset' is a corpus of movie reviews used for sentiment analysis. The original dataset includes over 10,000 sentences, half of which were considered positive and the other half negative. The sentences in that original dataset were re-ordered and each parsed into multiple phrases, with duplicates of any common or repeated phrases being deleted. The resultant dataset is comprised of over 150,000 tab-separated files with phrases. The phrases have been assigned sentiment labels from the selection of: positive, somewhat positive, neutral, somewhat negative, negative.

It has been recognised herein that, in order to obtain statistically reliable outputs solely from subjective (i.e. human) analysis of audio-visual data, a very large number of participant analysts must be used, and a very large number of audio-visual clips must be analysed. Thus, such a process is financially expensive, unwieldy and difficult to implement in practice.

It has further been recognised herein that existing machine-led audio-visual analysis tools are generally limited in that, whilst they can provide statistics on words spoken, they cannot reliably capture or understand the nuances or inferences that often exist in human speech and expression. Therefore the usefulness and reliability of such tools is limited.

The arrangements described herein have been developed, in light of the above considerations.

### Summary

At its most general level; the present disclosure provides a system and method(s), that enable reliable and useful analysis to be performed, by an analysis tool, of audio-visual, visual and audio data, comprising human speech. The approaches described herein can use audio characteristics and/or patterns within the speech, which may be considered in combination with the words themselves, in order to capture the intention or context of a user's speech, which bland analysis of the words in isolation would be unable to provide. Moreover, the approaches described herein may be used to make determinations about the speaker, based on the audio characteristics, patterns or other features of his or her speech. In addition, the approaches described herein may be used to output an evaluation of an attribute or property, based on the speech, wherein the output is not merely a binary indicator of the presence or absence of an attribute or property, but comprises a quantitative or qualitative measure - that may be absolute or relative - of that attribute or property.

The approaches described herein can also usual visual indicators to assist with the provision of a more detailed, intelligent analysis of human speech. An audio-visual recording may be broken down into different facets, for analysis, wherein those facets may comprise the visual image component(s), audible component(s) and/or the text (i.e. the actual wording) of the speech within that recording. Separate analysis may be applied to different respective facets of a single recording and two or more of those analyses may be combined to provide an overall determination in relation to that recording. The analyses may output, for example, a recognition or evaluation of an attribute associated with a speaker, for example an emotion or state of mind of the speaker.

By using the approaches described herein, recordings or so-called 'clips' of audio-visual data (or audio data or visual data) can be accurately and efficiently categorised, or otherwise sub-divided, for storage and/or for subsequent use and/or for reference purposes. Moreover, the approaches described herein enable more information to be derived from a limited data set (e.g. from a predetermined length of recording and/or from a predetermined number of recordings), than would have been possible with known analysis tools.

Before the tool as described herein is put into operation, it may undergo a learning phase (which may also be referred to as a calibration phase or a development phase). During the learning phase, the tool may be configured to refer or link to one or more existing datasets that has previously been created, which comprises analyses by a very large number of participants of a very large number of clips. Such datasets, which will be known to the skilled reader, are compiled in order to connect or link particular types of data (which may comprise certain words, phrases, facial expressions, images or audible data) to corresponding labels or outputs. The tool as described herein may be configured to use those pre-established connections, from existing datasets, and apply them to the analysis of new audio or audio-visual clips. During its operation phase, the tool described herein may be configured not to rely on any additional human input but instead to be fully automated.

According to a first aspect, there is provided a method for processing speech data for a speech event, wherein the speech data comprises a visible component and an audible component. The method comprises identifying a first visible feature within the visible component that corresponds to a predetermined visible speech feature and determining a first time (t₁) corresponding to the occurrence of the first visible feature, during the speech event. The method further comprises determining a measurement of a characteristic of the audible component, at a second time (t₂), during the speech event, which has a pre-defined temporal relationship to the first time (t₁) at which the first visible feature occurred, and using the determined measurement of a characteristic at the second time (t₂), to output an evaluation of an attribute, with which the predetermined visible speech feature is associated.

The speech event may comprise live speech, which is being captured by a suitable audio or audio-visual capture means. The speech event may comprise a recording of a speech, which has been pre-recorded by a suitable audio or audio-visual capture means. For example, a suitable audio or audio-visual capture means may comprise any of: a smart phone, a voice recorder, a camera, a laptop computer or a tablet computer.

The speech event may comprise a person (i.e. a human) speaking. The person may be speaking in any language. There may be one person speaking during the speech event but analysis may be applied separately for different, respective speakers.

The speech data may be derived from a recording or from live capture of the speech event. The speech data may comprise the actual captured visual images and the actual sound, as heard by the human ear, of the person speaking and of anything else audible that has been captured. The speech data may also comprise written text - which may be electronically written - which is a representation or a record of some or all of the words that were spoken, during the speech event.

A visible component of the speech data may comprise a visual image, or a combination of images, which may be static or dynamic. A visible component may comprise a human-readable component such as written text, which represents or records some or all of the words spoken, during the speech event. An audible component of the speech data may comprise the sound of some or all of the words spoken, during the speech event. An audible component may comprise some or all of the other captured audio, during the speech event, such as background noise.

The speech data may also comprise technical data, or so-called 'characteristic data', in relation to the speech event, comprising information relating to one or more characteristics of one or more of the visible components and/or of the audible components. For example, in relation to the audible components, the characteristics may include any of: volume, pitch (i.e. frequency), speed, length of pauses (i.e. the absence of speech) between words, tonnetz, ferments, Mel Frequency Cepstral Coefficients, Energy Entropy, Short Time Energy, Zero-Crossing Rate, Spectral Roll-Off, Spectral Centroid, Spectral Flux, Pitch Spectral autocorrelation function (ACF), and Pitch Spectral Harmonic Product Spectrum (HPS).

A first visible feature within the visible component may comprise a written word or phrase, or part of a word or phrase, that represents a word or phrase spoken during the speech event. A predetermined visible speech feature, which the first visible feature may be identified as corresponding to, may comprise a predetermined written word or phrase, or part of a word or phrase, which is comprised in a predetermined list or library or database or model. There may be more than one library of predetermined written words or phrases, to which the first visible speech feature is compared, for identification purposes. For example, the first visible feature may comprise a word or phrase representing a 'skill' or qualification or job type, that the speaker says to convey that he or she possesses that skill or qualification or is suitable for that job type. For example, the first visible feature may comprise a word or phrase that is regarded as being an 'assessment keyword' wherein an assessment keyword provides a qualitative measure or a context to the skill in relation to which it is used.

In order to 'correspond to' the predetermined visible feature, the first visible feature may have to match the predetermined visible feature exactly, or to within a predetermined degree of tolerance or error.

The method may also comprise identifying a second visible feature within the visible component; wherein the second visible feature corresponds to a predetermined visible speech feature, which may be different to the predetermined visible speech feature to which the first visible feature corresponds, and identifying a time t₃ at which the second visible feature occurs, during the speech event. The method may comprise defining a relationship between the first visible feature and the second visible feature, based on a temporal relationship between t₁ and t₃. For example, if t₁ and t₃ occur within a predefined time range of one another, they may be determined to have been said in relation to one another. For example, the first visible feature may be a skill word and the second visible feature may be an assessment keyword, spoken in relation to that skill.

A first visible feature within the visible component may comprise a (human) facial expression, that has been captured during the speech event. A facial expression may be regarded as being a particular combination of positions and/or orientations of different respective features, or geometric landmarks, of a human face. A facial expression may be regarded as comprising certain facial features being visible, or not visible, or only partially visible. A facial expression may be represented, or analysed, using geometric points such as so-called 'landmark points' on a face and the relative positioning and/or distance between and/or direction of those landmark points. The first time (t₁) may comprise a time range and the first visible feature may comprise a temporal sequence of facial expressions, or appearances, or geometric configurations, over that time range.

A predetermined visible speech feature, which the first visible feature may be identified as corresponding to, may comprise a predetermined image of a facial expression and/or a predefined mathematical or geometric representation of a facial expression, which is comprised in a predetermined list or database or model. The predetermined visible speech feature may comprise a temporal sequence of facial expressions. In order to 'correspond to' the predetermined visible feature, the first visible feature may have to match the predetermined visible feature exactly, or to within a predetermined degree of tolerance or error.

The first time (t₁) that corresponds to the occurrence of the first visible feature may represent the time, starting (from t = 0) at the beginning of the speech event, at which the first visible feature occurred, during the speech event - i.e. the time at the first visible feature either was visible as an image or the spoken word or image, which the first visible feature represents, was spoken. The first time (t₁) may be an instantaneous time or it may comprise a time range.

The second time (t₂), during the speech event, which has a pre-defined temporal relationship to the first time (t₁), may be an instantaneous time (or more than one instantaneous times) or it may comprise a time range. The first time (t₁) and the second time (t₂), may be the same time or time range i.e. t₁ = t₂. Alternatively, the predefined temporal relationship may dictate that t₁ is, for example, just before or just after t₂. The terms 'just before' and 'just after' in this context may be predefined as comprising a (relatively short) time range. For example, the first time (t₁) may be up to 3 seconds after the second time (t₂). In some cases, it may be appropriate for the second time (t₂) to comprise one or more instantaneous times before the first time (t₁) and one or more instantaneous times after the first time (t₁).

The analysis tool may enable the user to select which characteristic of the audible component, from a plurality of possible characteristics, to determine a measurement of. Moreover, the nature (i.e. the detail) of the predefined temporal relationship between the first time (t₁) and the second time (t₂) may be dependent on which characteristic is selected. That is; the pre-defined temporal relationship between the first time (t₁) and the second time (t₂), may vary according to what characteristic of the audible component is being measured or determined.

For example, if the characteristic is volume, the second time (t₂), for which a measurement of the volume will be determined, may be up to a few seconds before the first time (t₁), or may comprise a time range that begins up to a few seconds before the first time (t₁), at which the first visible feature occurred. The reason for this is that, for example, the analysis tool may be pre-configured to recognise that a person may increase the volume of his or her speech at a time at which (or just before a time at which) he or she wishes to emphasise something, or when he or she feels more confident about saying that something. Therefore the volume of the audible component of a person's speech, in the seconds leading up to him or her saying a particular word or adopting a particular facial expression, may be significant and may have a bearing on the meaning or context of the word or facial expression, and may impact on an evaluation that can be made as a result of that word being said or that facial expression being adopted.

The determination of a measurement of a characteristic of the audible component may comprise obtaining an absolute or relative measurement. It may comprise obtaining a rate of change of the characteristic and/or the amount (either relative or absolute) that it changes, during a predefined time period. The determination may comprise looking at how a measurement of the characteristic changes before during and after the occurrence of the first visible component, during the speech event.

The analysis tool may be pre-configured so that a predetermined speech feature, to which the first visible feature corresponds, and which may be a word or a phrase or a facial expression, has an attribute associated with it. For example, the 'attribute' may be a recognition of a skill or qualification or point of experience. For example, the 'attribute' may be a personality trait or a human characteristic such as, for example, punctuality, reliability, discretion, extroversion, and so on. For example, the 'attribute' may be an emotion, or a state of mind, or emotional state.

The determined measurement of a characteristic of the audible component may be used to quantify, or to give context or meaning to, or to assist in assessing whether and to what extent the analysis tool should take notice of, the occurrence of the first visible feature, and/or its associated attribute. The determined measurement of a characteristic of the audible component may be used to change, or to modify, or to determine a level or an extent of, the 'dictionary meaning' of the first visible feature, when that first visible feature comprises one or more words said by the speaker, during the speech event. The determined measurement of a characteristic of the audible component may be used to interpret, for example, how strongly the speaker believes or has confidence in what he or she is saying. The determined measurement of a characteristic of the audible component may be used to determine a level of knowledge or expertise, possessed by the speaker, in relation to what he or she is saying (or has said).

The determined measurement of a characteristic of the audible component may have an attribute associated with it. For example, a particular type of audio signal may have a label comprising a particular emotion or state of mind, for the speaker. The occurrence of that type of audio signal may be used to check, or add to, or confirm, an emotion that has been determined as being an attribute associated with the predetermined speech feature (such as a facial expression or temporal sequence of facial expressions), to which the first visible feature (which may also be a facial expression or temporal sequence of facial expressions) corresponds. The emotions associated with the audio signal and with the predetermined visible feature, to which the first visible feature in the speech data corresponds, may be combined to provide a combined emotion output. The output may comprise an indication that a particular emotion has been detected and/or a level or extent of that emotion.

For example, if the characteristic of the audio signal is volume and the first visible feature is a word relating to a skill, and if it is determined that the speaker increases his or her volume before saying a skill word such as 'programmer', the analysis tool may evaluate that the speaker is confident in asserting that he or she is a capable programmer. Conversely, if the characteristic is volume, and if it is determined that the speaker decreases his or her volume before saying a skill word or phrase such as 'systems analyst', the analysis tool may evaluate that the speaker is not confident in asserting that he or she is a capable system analyst. As a result, the analysis tool may output a more positive (higher-rated) evaluation for the speaker being suitable for a 'programmer' job and it may output a relatively less positive (lower-rated) evaluation for the speaker being suitable for a 'systems analyst' job.

According to another aspect, a data processing tool is provided, comprising a control unit and a memory, wherein the control unit is configured to process speech data for a speech event, wherein the speech data comprises a visible component and an audible component. The control unit further being configured to identify a first visible feature within the visible component that corresponds to a predetermined visible speech feature and determine a first time (t₁) corresponding to the occurrence of the first visible feature, during the speech event. The control unit further being configured to determine a measurement of a characteristic of the audible component, at a second time (t₂), during the speech event, which has a pre-defined temporal relationship to the first time (t₁) at which the first visible feature occurred and to use the determined measurement of a characteristic at the second time (t₂), to output an evaluation of an attribute, with which the predetermined visible speech feature is associated.

According to another aspect, there is provided a method for processing speech data for a speech event, wherein the speech data comprises a visible component and an audible component. The method comprises identifying a first visible feature within the visible component that corresponds to a first predetermined visible speech feature and determining a first time (t₁) corresponding to the occurrence of the first visible feature, during the speech event. The method further comprises identifying a second visible feature within the visible component; wherein the second visible feature corresponds to a second predetermined visible speech feature, which may be different to the first predetermined visible speech feature, and identifying a time t₃ at which the second visible feature occurs, during the speech event. The method further comprises defining a relationship between the first visible feature and the second visible feature, based on a temporal relationship between t₁ and t₃ and using the second predetermined visible speech feature to output an evaluation of an attribute, with which the first predetermined visible speech feature is associated.

For example, if t₁ and t₃ occur within a predefined time range of one another, the corresponding visible features - which may comprise words within a transcript of the speech - may be determined to have been spoken in relation to one another. For example, the first visible feature may be a skill word and the second visible feature may be an assessment keyword, spoken in relation to that skill. For example, the meaning of the assessment keyword may be used to evaluate an attribute associated with the skill word. For example, the meaning of the assessment keyword may be use to determine whether the skill should be regarded as being possessed by the speaker, or not being possessed by the speaker. For example, the meaning of the assessment keyword may be used to determine the level of the skill that the speaker is possesses.

The first visible feature may correspond to a first predetermined visible speech feature from within a first respective library or database. The second visible feature may correspond to a second predetermined visible speech feature from within a second, different respective library or database.

The method may comprise assigning a first score or value to the first visible speech feature and assigning a second score or value to the second visible speech feature. The method may further comprise combining the first and second scores (or values) to produce an overall score. The score or value for the second visible speech feature may be used to determine whether or not the first visible speech feature should be disregarded.

When checking whether a visible speech feature within a speech corresponds to a predetermined visible speech feature, for example within a library, the method may comprise first comparing the predetermined visible speech feature(s) within that library that have the highest number of elements (e.g. the largest number of words) to the visible features of the speech, to look for a correspondence or match. The method may further comprise next checking whether the predetermined visible speech feature(s) within that library that have the second highest number of elements (e.g. the second largest number of words) to the visible features of the speech, to look for a correspondence or match. The method may further comprise disregarding a visible speech feature within a speech, to omit it from checks for correspondence to other predetermined visible speech features, if it has been found to correspond to (i.e. match) a predetermined visible speech feature for which a check has already been performed.

For example, if t₁ and t₃ occur within a predefined time range of one another, the corresponding first and second visible features - which may comprise facial expressions or facial appearances or geometric configurations of landmark points on a face - may be determined to have been adopted (or visually expressed) by the speaker, one after another, in a temporal sequence. Therefore, the first and second visible features may form a moving image or video. For example, the first visible feature may be a first facial expression and the second visible feature may be a second, possibly different facial expression, which the speaker adopts just before or just after adopting the first facial expression. For example, an emotion (or state of mind) that has been pre-assigned as corresponding to the second facial feature may be used to evaluate, or provide a level of, or confirm or call into question the presence of, an emotion (or state of mind) that has been pre-assigned as corresponding to the first facial feature. For example, if the first visible feature is a smile that indicates mild happiness and the second visible feature is a broader smile that indicates a greater level of happiness, the combination of the two visible features, in close temporal proximity, confirm an emotional output of 'happiness'. The data processing tool may comprise any suitable combination of hardware and software means. It may be referred to as being 'an analysis tool'.

The method, according to any of the above aspects, may be a computer implemented method. It may be carried out by an analysis tool, or by a facet of an analysis tool, wherein that analysis tool comprises one or more computers, machines or electronic devices, or a combination of these. The analysis tool may comprise any suitable combination of hardware and software components. The analysis tool may be network-enabled, and thereby configured to communicate via a suitable network such as Wi-Fi or 4G to one or more other devices, or to a server or to an application running on a device.

Hence a highly sophisticated, intelligent analysis tool is provided. The analysis tool can provide outputs that are very useful to, and useable by, the end user because they are more graduated or sub-divided than the outputs and conclusions from known analysis tools would be, based on the same data set. The analysis tool does not, for example, merely detect the presence of an attribute (i.e. a skill) from words spoken by a user. Instead it may use other, correlated aspects of the user's speech to apply an evaluation to what he or she has said.

### Summary of the Figures

**Figure 1** shows a schematic view of an analysis tool
**Figure 2** shows a method of recognising skills from a transcript, according to an algorithm
**Figure 3** shows a general method for recognising and evaluating an attribute from a speech event
**Figure 4** shows the creation of an attention vector for an example sentence

### Detailed Description

Particular arrangements will now be described that relate to audio-visual recordings that comprise human speech. However it will be appreciate that the techniques described below may be applied to other sources such as audio recordings, which do not also comprise a visual element, to visual recordings in which the audible content of a user's speech is not available, and to live speech.

It will be appreciated that the techniques described below can be applied to audio-visual, visual or audio recordings or live speech (hereinafter referred to collectively as 'clips') wherein the human speech within each clip can be in relation to any topic or subject. Moreover, the techniques can be applied to speech in any language, however any analysis and learning should be conducted separately for different respective languages, to avoid potential confusion.

The content of the speech, which is to be analysed, may have a predefined purpose or topic or aim, so that the sentences make linguistic and logical sense and so that the speech as a whole is cohesive. This may allow different respective sentences, or words, or other parts of the speech, to be analysed more fairly and evenly, with respect to one another. The speaker may be asked to use only real, recognisable words in his or her speech. Any words that are not recognised may be disregarded by the analysis tool.

The speech may be rehearsed or spontaneous. It may be read from a written document, or from prompt notes, or memorised, or it may be freely spoken without any memory aids being employed. A clip may involve more than one speaker however, according to at least some arrangements, the analysis may be applied to only one individual speaker or to each individual speaker separately.

The clip does not need to be of any predefined length (of time) however at least in some arrangements the analysis tool will apply the described techniques to the same length (of time) for each clip and for each individual, for statistical robustness and reliability. Moreover, the analysis tool may be configured to apply the described techniques for no more than a predetermined length of time per clip.

### The Analysis Tool

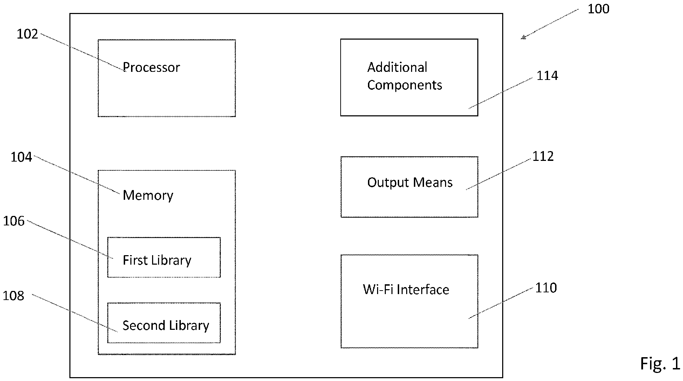

In the following description, we refer to an 'analysis tool' which is shown schematically in Figure 1 herein. The analysis tool 100 shown comprises a processor 102, which is configured to run the analysis method(s), and a memory 104 that is configured to store, *inter alia*, first 106 and second 108 libraries, to which visible components of audio-visual clips will be compared, by the processor 102, as detailed further below. The memory 104 may also store firmware, that the processor 102 is configured to run. The processor 102 and memory 104 can also be configured to run and store one or more models, as detailed further below. The analysis tool 100 in this arrangement comprises a wireless interface 110, for communication via a network such as Wi-Fi. It also comprises an output means 112 that may include a screen, for outputting evaluations of the analyses conducted. It may also comprise additional components 114, such as a power source, which are not discussed in detail herein.

It will be appreciated that the analysis tool shown in Figure 1 is only one example and is a schematic representation only - it should not be regarded as being limiting on the present disclosure. The analysis tool 100 is shown schematically in Figure 1 as being a single entity, however that need not be the case. The analysis tool 100 may comprise a combination of one or more computers, machines, or electronics devices. It may comprise one or more applications, being run on a computer or on an electronic device, and/or it may comprise one or more remote, cloud-based elements such as a cloud-based server.

In practice, the analysis tool may comprise any suitable combination of hardware and software, parts of which may be physically separate to other respective parts. The analysis tool may be sold or otherwise supplied to a user as a software product, which comprises the instructions and/or the models required to run the techniques described herein, wherein that software is to be implemented using the user's chosen hardware.

Different parts of the analysis tool may be networked, to communicate with one another and/or with other devices. The memory of the analysis tool may not store first and second libraries. It may store just one library or it may access one or more libraries that are stored elsewhere. There may be multiple different memory locations, configured for different respective storage purposes, which may be separated physically or may simply be logically/functionally separate to one another. There may be multiple different processors or control units, configured for different respective functional purposes, which may be separated physically or may simply be logically/functionally separate to one another. The analysis tool 100 may have other so-called 'tools' comprised within it - for example, an Automatic Speech Recognition (ASR) tool. Or the analysis tool 100 may simply communicate with other such tools, and access the outputs of other such tools, in order to use those outputs as part of its analysis, which is detailed herebelow.

### Learning/Calibration of the Analysis Tool

Before the operation of the analysis tool 100 is described in detail, we will first discuss the learning phase (or calibration phase or development phase) that the analysis tool 100 undergoes, prior to operation. At least according to the presently-described arrangement, the analysis tool 100 undergoes a learning phase just once, which happens during its development, before it is then deployed on a machine, device, computer or server.

After the deployment of the analysis tool 100, in this arrangement, it is not further calibrated. However, software updates may be done on the analysis tool 100. For example, a new version of the software may replace the older version. This new version may include a new finetuning, to fix errors, or to alter the conditions under which certain rules or algorithms or models are applied to the clips that are subsequently analysed by the tool 100.

The learning phase of the analysis tool 100 effectively comprises equipping the analysis tool 100 with the algorithms, models, datasets and/or other tools, that it will use during operation. For example, as described in more detail below, the analysis tool 100 in this arrangement uses a custom algorithm for recognising 'skills' words, from a curriculum vitae (CV). Therefore, the learning phase for such an arrangement comprises storing that custom algorithm in the memory 104 of the tool 100 and programming the processor 102 so that it 'knows' when and how to apply the custom algorithm to new clips, during operation of the analysis tool 100.

The learning phase also comprises, for example, configuring the analysis tool 100 to store or access particular existing databases or datasets, which have been compiled to link certain data types to labels or outputs. The learning phase comprises programming the analysis tool 100 to 'know' when to access a particular database, and to provide rules with how it uses it to provide outputs for clips that it analyses, during operation.

It will be appreciated that the exact steps carried out during the learning phase of the analysis tool 100 will depend on the particulars of the analysis that it will be used for, in operation. For example, in the particular arrangement discussed below, the analysis tool 100 has been configured to evaluation of CV's, which means it accesses databases that link 'skills' words to labels or scores, but the same analysis tool could be configured, during the learning phase, to access different types of database, for the recognition and evaluation of different types of words, phrases, images, facial expressions and so on.

### Operation of the Analysis Tool

An arrangement will now be described, of the analysis tool in operation, in which analysis is applied to clips of multiple individuals, each reciting a 'curriculum vitae' (CV) for him or herself, for example as part of a job application process. In this arrangement, each individual, whose speech is to be analysed, is instructed to recite a CV that details his or her education and professional experience and his or her attributes, strengths and skills that may be relevant to the job or area of employment in which the individual is interested. He or she is also free to include information about personal interests, hobbies and so on.

Each individual is instructed to create an audio-visual recording of him or herself that is approximately 90 seconds long. The recording made by each individual should feature only him or herself, not accompanied by anyone else (unless this is a requirement, for example for medical purposes) and the audio element should preferably only feature the voice of that individual, with as little background noise as possible. From a visual perspective, the individual is instructed to face the camera (or other recording device that is being used to capture the recording) and to ensure that, as far as is practicable, his or her whole face is clearly visible to the camera, throughout the recording.

Although it is possible to capture and analyse live speech data, in this arrangement the analysis is applied to pre-recorded clips, each submitted by different respective individuals. The process followed for a single clip is described here, but it will be appreciated that this process can be repeated for multiple different clips.

The individual may be instructed to submit the clip in a particular format, using a particular file type. The individual may submit the clip via any suitable process. For example, if the file is small enough, it may be sent via email. Alternatively, the file may be shared via a suitable social media platform, for example a platform dedicated to professional profiles or to recruitment. Alternatively, the file may be uploaded to a website or other platform that is hosted by a prospective employer, or by a company or other entity that is going to carry out the analysis of the clip(s, under the instruction of the prospective employer.

When the file comprising the audio-visual recording or 'clip' has been submitted, it is received by the entity that controls the analysis tool, which will perform an analysis on the clip. That entity (or a person representing that entity) may download the file, or access it via email, or otherwise obtain access to it in any suitable manner, dependent on how it has been submitted.

### Skills recognition

In this arrangement, the analysis tool 100 has been pre-configured, during its learning phase, to perform a method for recognising skills, and optionally for obtaining or evaluating a level of one or more skills, from a clip comprising speech, by using audio features and natural language processing components of the speech. This method is discussed in detail herebelow:
As a first step; the audible speech data from the clip is extracted and may be saved as an audio file. As the skilled reader will recognise, there are known software tools available for performing such an extraction, and any suitable extraction tool may be used. For example, 'MoviePy' is a 'Python' product that can read and write many audio and video formats, and which could be used for this purpose.

Once the audio file has been created, a speech recognition process is then carried out with respect to the audio file. An ambient noise cancellation is also carried out. Again, any suitable speech recognition and noise cancellation tools may be used for these processes, as will be apparent to the skilled reader. In general terms; speech recognition tools (often referred to as 'ASR' (Automatic Speech Recognition) tools) take spoken audio content as an input, and provide a written transcription of what was said, as an output. In order to do this, an ASR tool may, when it receives the audio input, create a wave representation of the audio input. Noise cancellation can be carried out, with respect to the wave, to remove background noise, and volume levels may also be normalized by the ASR tool, to create a filtered wave representation of the audio input. The filtered wave representation is then broken down into so-called 'phonemes'. A phoneme is a basic component building block of a language or its words. For example, English has 44 phonemes, which represent letter combinations such as "wh", "th", "ka" and "t". An ASR tool has a library of phonemes stored in its memory and is configured to recognise them, and to use statistical probability analysis to derive whole words, whole sentences, and so on, from phonemes. An ASR tool may be configured to understand phonemes when they are pronounced in several different ways - for example, by people having different respective regional or national accents.

In this arrangement, two different speech recognition (ASR) tools are both employed to conduct speech recognition with respect to the same audio file. Each ASR tool returns a transcript text, which comprises the text form of the speech from the clip, and a confidence level for the text. The analysis tool 100 checks the confidence levels returned by each ASR tool, and selects the transcript from the one which returned the higher confidence level. This is to ensure that the text which the analysis tool 100 uses, for subsequent analysis, is as 'true' as possible, to what was spoken by the individual.

It will be appreciated that, in other arrangements, the analysis tool may be configured to receive transcripts from more than two or fewer than two ASR tools. Moreover, the logic determining which transcript is selected by the analysis tool can be changed, via a software update to the tool

Once the written text has been created, the next step is to make one or more recognitions or evaluations, based on the written text.

It will be appreciated that the particular details of what the analysis tool 100 has been pre-configured, during its learning phase, to recognise or evaluate may depend on the context of the clips that are to be analysed, and/or on the intended purpose of the analysis. For example, different end users may be interested in different respective types of evaluation. According to this arrangement at least, if the user wishes to change or finetune the configuration of the analysis tool 100, this should be done via a software update that would effectively replace an older version of the software with a newer version.

In this particular arrangement, to which the disclosure is not limited, the recordings are audio-visual CV's and relate to the individuals' academic and/or professional skills and experience, and their potential suitability for a particular job or type of job or area of education or employment. Therefore the recognition and evaluations that are made for this particular arrangement focus on so-called 'skills'. According to this arrangement, two methods are employed for recognising skills and two methods are employed for evaluating skills.

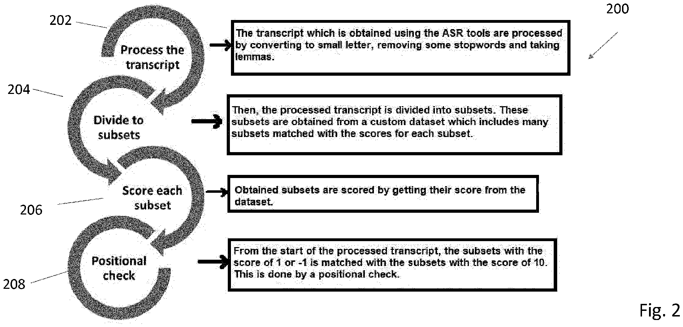

The first method of recognising skills, according to this arrangement, uses a custom algorithm, which is discussed in detail in relation to Figure 2, below. During the learning phase, the analysis tool is programmed to run this custom algorithm, for skills recognition. The second method of recognising skills, according to this arrangement, uses a machine learning model, created using machine learning algorithms. During its learning phase, the analysis tool 100 is configured to either selectively apply one or other of these methods, for skills recognition, or to apply both methods and combine their outputs

According to the first method of recognising skills; the analysis tool 100 is pre-configured to store, or to otherwise have access to, a first library 106 of words and phrases that represent 'skills'. In operation, and as detailed further below in relation to Figure 2, when the analysis tool 100 receives a text (or transcript) that has been derived from an individual's audio-visual clip, the it compares the text to that library 106 of skills, to identify any matches. The analysis tool 100 is therefore configured to identify any (and all) occurrences of such words and phrases, within the written text.

In this context, the term 'skills' is used to describe a set of words and phrases that relate to different areas of employment (or education) and to different tasks that an individual may carry out during the course of his or her employment, which may be relevant to his or her professional abilities, suitability or experience. The 'skills' words and phrases include broad, over-arching job titles such as, for example, 'manager', 'lawyer', 'teacher', 'software programmer' and so on. The 'skills' words and phrases also include more specific roles or specialisms such as, for example, 'human resources manager', 'primary school teacher', 'intellectual property lawyer', 'systems analyst, 'C++ developer' and so on. In addition to roles/jobs/tasks, anything that, in a professional job context, the candidate is proficient in may be considered to be a skill. For example, skills may refer to proficiency in using software tools e.g. Java, MS Office, and so on. For example, skills may refer to proficiency in languages e.g. English, French, and so on. For example, skills may refer to proficiency in relation to topics e.g. image processing, molecular biology, and so on. In this arrangement, the analysis tool is configured to access a pre-stored library that comprises a list of over 7800 different skills, when analysing the written text that has been derived from an individual's audio-visual clip, and to identify any matches between the written text and the skills on the pre-stored list.

In addition to accessing a first library 106, which comprises a list of skills, the analysis tool 100 is configured to also access a second library 108, which comprises a pre-stored list of assessment keywords, which can be used to evaluate the corresponding skills. The assessment keywords comprise words and phrases that can be used to understand whether the candidate has a skill or not. For example, the assessment keywords can include phrases such as "have developed", "specialize", "have training", "learnt", "have experience", "do not know", "familiar". The list of assessment keywords can include some descriptors as well e.g. "trained", "experienced". The assessment keywords can be positive or negative. For example, words such as "know" "have experience of" may be regarded as positive assessment keywords. By contrast, phrases such as "do not know" or "have no experience of" may be regarded as being negative assessment keywords. The analysis tool may be configured to recognise that positive assessment keywords indicate that the person has the mentioned skill, whereas negative assessment keywords indicate that the person does not have the skill. This is discussed in more detail, below.

In some arrangements, the assessment keywords may include an assessment on the level of the skill. For example, the positive assessment keywords can be detailed in the second library 108 of assessment keywords. In such an arrangement, "know very well" may be an positive assessment keyword which indicates a high level of expertise while "know" may be a positive assessment keyword which indicates an average level of expertise.

In the present arrangement, the occurrence of assessment keywords is detected by the analysis tool 100, within the written text, by looking for matches to the words and phrases in the second library 108. This, and the detection of skills words, is controlled by a custom algorithm, as discussed further below in relation to Figure 2. Dependent on, for example, the length of the written text, the analysis tool 100 may be configured to break the text up into portions or chunks, and to perform a check for both skills and assessment keywords matches, to each portion of text separately, one at a time.

Once both the skills and the assessment keywords have been identified, individual occurrences of skills and assessment keywords can then be associated with each other, by the analysis tool 100, according to their position in the text and their 'part of speech' characteristics. As the skilled reader will be aware, 'part of speech' is a natural language processing term, which explains the use of a word in a sentence. There are 8 main parts of speech: Nouns, pronouns, adjectives, verbs, adverbs, prepositions, conjunctions, interjections. As the skilled reader will also be aware, there are known software tools that can be employed for identifying the part of speech characteristics, to which particular words belong, and any suitable tool of this type may be used. For example, the 'StanfordNLP' framework is a known software tool that can be used to obtain the part of speech characteristics, to which particular words belong, which is employed by the analysis tool 100 in this arrangement.

Figure 2 provides more detail on the custom algorithm that the analysis tool 100 applies, when it carries out the first method 200 for skills recognition. The custom algorithm is employed in order to recognise both skills and assessment keywords and to determine the associations between the skills and the assessment keywords. It can determine which assessment keywords have been used in relation to which respective skills, and ultimately make a determination as to which skills a candidate possesses. Moreover, the context and relative occurrence or position within the text of assessment keywords, as compared to the skills, may be used by the analysis tool 100 to provide an evaluation of the level (or extent) those skills.

As a first step 202 in the method 200, the analysis tool processes the transcript that it has selected, from an ASR tool. This processing step comprises converting the text into small letters, removing some stopwords and taking lemmas. As the skilled reader will recognise, so-called 'stopwords' are, by definition, words that are filtered out during the processing of a text. For example, "the", "a", "an", "in", "or", "am"," are some of stopwords in English. In this arrangement, the stopwords which are recognised include "the", "a", "an", "or", "if", and "because". The skilled reader will also be aware that a so-called 'lemma' is the dictionary or canonical form of a word. Taking lemmas (which can also be referred to as lemmatization) means getting the lemma form of each word in a text. For example, if we the lemma of "flowers" is "flower". There are known siftware tools for taking lemmas for a text. In this arrangement, the analysis tool uses StanfordNLP's lemmatizer to find the lemma of each word.

At step 204, the analysis tool 100 divides the processed transcript into 'subsets'. These subsets are obtained by comparing the words within the text to a custom dataset (or library), wherein the dataset (or library) includes a large number of predetermined words or phrases, with corresponding pre-assigned scores for each predetermined word or phrase. As described in detail above, the transcript may be compared to more than one library, to identify different respective types of subsets. In this arrangement, division of the transcript into so-called 'subsets' comprises dividing it up according to three categories: recognised skills, recognised assessment keywords, and non-recognised (i.e. remaining) words.

In order to divide the transcript up into subsets during step 204, the analysis tool 100 is configured to recognise words or phrases that comprise skills, and (separately) words that comprise assessment keywords, and to differentiate both skills words/phrases and assessment keywords from the remaining words in the transcript. In order to do so, according to this arrangement, the analysis tool 100 refers to the first library 106 of skills and compares the words and phrases therein to the words in the transcript. It is configured to start from the longest element(s) by word number, within the first library 106, and to proceed through to the shortest element(s). For example, it may first compare a three-word element such as "mobile application developer", then it would compare a two-word element such as "computer engineer", and then it would compare single word elements such as "doctor", in order. The analysis tool 100 attempts to match each element to the text of the transcript. When a match is made, the matched part of the text is removed by converting it to 'x' letters and the process repeats itself until the tool has attempted to match all the elements on the list. For example, if the text says "I am a computer engineer", the tool tries to match "mobile application developer" and fails. Then it tries to match "computer engineer" and succeeds, at which point it converts the text into "I am a xxxxxxxx xxxxxxxx". Then it tries to match "doctor" and fails. When the analysis tool 100 has tried to match the entire library of skills to the text, it can understand which skills are the matched skills, in accordance to which words within the text have been replaced by 'x' letters. In this example, therefore, the tool 100 will recognise that "computer engineer" is a skill that has been mentioned in the text.

The analysis tool 100 applies the same flow to detecting assessment keywords, by comparing them to the list of words and phrases in the second library 108. When this has been done, it then splits the text into subsets, comprising recognised skills, recognised assessment keywords, and non-recognised (i.e. remaining) words.

At step 206, the analysis tool 100 scores each subset. This is done by referring to the scores which have been pre-assigned to the matched word or phrase, within the relevant library. For example, in this arrangement, each of the 'skills' words, that appears in the first library 106, has a corresponding score of '10'. Each of the 'positive keywords' in this arrangement is given a score of '+1' and each of the negative assessment keywords is given a score of '-1'. As mentioned above, in some arrangements the assessment keywords may have a more granular scoring system, with more positive words having relatively higher positive scores. For example, positive assessment keywords may have scores ranging from +1 to +3, dependent on the level of their positivity.

At step 208, the analysis tool 100 performs a positional check to match the skills to the assessment keywords, based on their respective positions within the transcript. The analysis tool 100 attempts to match every phrase that comprise a skill (i.e. every subset to which a score of 10 has been assigned) to a phrase that contains either a positive or a negative assessment keyword (i.e. a subset that has a score of +1 or -1.) If there is a phrase with a score of 10, that is matched with a phrase with a score of +1, the analysis tool determines that the skill, which is comprised within that phrase with a score of 10, is a skill that the candidate, who produced the clip, possesses. If, as mentioned above, the positive assessment keywords have a range of possible positive scores, a skill that is matched with a more positive assessment keyword (for example, one that scores +3) will be acknowledged by the analysis tool 100 as being a skill that the candidate has a relatively higher level of knowledge or experience of, as compared to a skill for which the corresponding assessment keyword had a lower positive score (e.g. +2 or +1).

By way of an example of the method 200 in action; if a candidate said, in his or her audio-visual CV clip "I have received training in machine learning", the analysis tool 100 would recognise "machine learning" as a skill. In addition, the analysis tool 100 would recognise "have received training" as an assessment keyword. Then, the tool would match these two occurrences to one another, based on their close proximity to one another within the text. The analysis tool 100 would check whether "have received training" is a positive (+1) or a negative (-1) assessment keyword. In this case, it would be recognised as a positive keyword and thus the tool 100 would recognise that the candidate does possess the skill of "machine learning".

By way of another example; if the candidate says "I do not know machine learning" then the analysis tool 100 would recognise "machine learning" as a skill. Also, the tool 100 would recognise "do not know" as an assessment keyword. Then, the tool would match these two occurrences to one another, based on position. The tool would check if "do not know" is a positive assessment keyword. In this case, it is not. So, the tool would recognise that the candidate does not possess the skill of "machine learning".

Thus, it can be seen that, in this arrangement, the analysis tool does not rely on the mere mention of a skill in order to determine that the candidate possesses that skill. Instead, it performs a check to ensure that the candidate has not mentioned the skill in a negative context (i.e. by saying 'do not have', 'do not know' or similar).

According to the second method of recognising the skills, which can be employed for this arrangement, the written text (or transcript) that has been derived from an individual's audio-visual clip is fed into a model, wherein the output of the model comprises a recognition of the skills within the text. The model used in this arrangement comprises a recurrent neural network (RNN) which, as the skilled reader will recognise, is a type of artificial neural network that can exhibit temporal dynamic behavior. The RNN comprises an input layer, an embedding layer, an LSTM (long short term memory) layer and an output layer.

The RNN model is trained, during its learning phase, on a custom dataset which contains a text corpus with skills. This model is created using a suitable set of machine learning algorithms, as will be familiar to the skilled reader. In this arrangement, the custom dataset on which the RNN model is trained has sentences, which are labelled with skills. For example, the model may be trained using sentences such as "I am good at biology", wherein "biology" is labelled as a skill. The analysis tool 100 is configured during its learning phase to create a model that finds a mathematical relationship between sentences and labels. This enables the tool 100 to recognise and extract the skills present in a newly encountered sentence, during its subsequent operation.

The RNN can use its internal memory to process sequences of inputs. In this arrangement, the written text from an individual's clip is converted to sequential indexes before being provided as an input, into the model. Also in this arrangement, word embedding is used in the embedding layer, wherein the words of the text are represented as numbers. As the skilled reader will recognise, word embedding is a technique in which a numerical value represents a word in such a way that the numerical values of different words show a relationship between two or more words, if such a relationship exists. For example, a known software product such as GloVe's pre-trained embeddings may be used, in this arrangement.

During operation of the tool 100, it can use the model to process input text and output any skills that the model recognises as being possessed by the candidate.

As mentioned above, the analysis tool 100 may be pre-configured to use one or both of the above-described skills recognition methods. For example, it may be configured to add any skills recognised by the first method to any skills recognised by the second method, and output the combined list of skills. Alternatively, it may be configured to only output a skill that has been recognised by both methods and/or to flag whether a skill has been recognised by one or both methods, so that the end user may know to re-check the candidates assertions in relation to those skills that have not definitely been recognised by both methods.

### Evaluating Skills

As a next step in the process, after the skills that a candidate possesses have been recognised, according to the content of his or her audio-visual clip, an evaluation is made by the analysis tool 100. The evaluation comprises an intelligent assessment on what has been said, based not just on a basic human understanding of what the speaker has actually said (and therefore on the message that he or she may have intended to convey) but on what can be derived based on other factors such as the patterns of his or her speech or on other characteristics of the speech itself. As a result, the analysis tool 100 can make inferences and/or suggestions and/or recommendations (both positive and negative) about the speaker and about his or her suitability for a particular job or role.

In this arrangement, the analysis tool 100 is configured to employ one or both of two methods, during the evaluation stage. The selection of whether one or other or both evaluation methods is to be employed occurs during the learning phase for the analysis tool 100. For example, the tool may be configured to run both evaluation methods but when the second method produces a result with a high probability i.e. higher than 75%, then the result of second one would overcome the first one. Otherwise, the result of the first one would be picked. But any other suitable combination of the outcomes of the first and second evaluation methods may be employed.

For the first method of evaluating the skills level, a machine learning model is implemented, wherein the model attempts to identify skills and their levels from a given sentence. In this particular arrangement, a convolution neural network (CNN) is employed. The CNN model comprises an input layer, an embedding layer, a CNN layer, an LSTM layer and an output layer. In this arrangement, word embedding is used in the embedding layer, wherein the words of the text are represented as numbers. In this particular arrangement, GloVe's pre-trained embeddings are used.

The CNN model is trained, during its learning phase, on a custom dataset which contains text corpus with skills which are labelled as being of different levels, to enable the model to understand the level of the skills out of context. The analysis tool 100 creates a model during the learning phase by "learning" from the custom dataset. This learning can then be applied by the analysis tool 100, during operation, in order to evaluate audio-visual clips.

The custom dataset is a pre-established dataset or database, which has been created based on human analysis of transcripts, each of which comprises sentences. The sentences comprised within those transcripts have been labelled (for the purposes of the dataset or database) with skill(s) and with corresponding levels of those skill(s). The 'skills' comprise words or phrases such as those listed in the first library 106, discussed in detail above in relation to skills recognition. The 'levels' are words that indicate an extent or degree or level of the corresponding skill. Skills word are recognised and labelled according to what the skill is, e.g. 'machine learning', 'computer programming' and so on. The labels for the levels are, in this arrangement, "basic", "below average", "average", "proficient", "highly proficient" for now. This labelling of 'skills' and their respective 'levels' is done by humans manually, for the custom dataset. For example, the sentence: "I know machine learning" may be labelled as "average" for level and "machine learning" as skill. On the other hand, for example, the sentence: "I know machine learning very well" may labelled as "high" for level and "machine learning" for skill again.

During the learning phase, the analysis tool attempts to make a statistical connection between the sentences within the transcripts and the 'skills' and 'levels' labels. The tool is able to create a mathematical model which has established a reliable and accurate statistical relationship between the sentences/transcripts and the labels.

During operation of the analysis tool 100, text that represents the skills and assessment keywords that have been recognised in the recognition stage of the process is converted to sequential indexes, before being input into the CNN model. The output of the model comprises an evaluation of the levels of the different respective skills that were previously recognised from the text.

According to an alternative arrangement, the assessment keywords are not considered by the model in the first method for evaluating the levels of skills.

In this arrangement, the outputs of one or both of the recognition methods, described above, can be used as inputs to the evaluation model. According to an alternative arrangement, a single model may be provided, for both recognition and evaluation of skills.

For the second method of evaluating the levels of skills attributed to an individual, based on his or her clip, the analysis tool 100 looks beyond the actual words comprised within the written text that represents what was said during the clip, and looks also at the technical characteristics of the of the audible sound (i.e. the sound of the user's speech) during the clip. The technical characteristics of the speaker's voice or speech, at a time when (and/or just before and/or just after) they say a particular skill, can be used by the analysis tool 100 to provide an evaluation of the level (or extent) those skills. The analysis tool may consider a single technical characteristic or a plurality of technical characteristics of the speaker's voice or speech.

The technical characteristics of the speech may comprise, for example, any of: volume, pitch (i.e. frequency), speed, length of pauses (i.e. the absence of speech) between words, ferments, Mel Frequency Cepstral Coefficients, Energy Entropy, Short Time Energy, Zero-Crossing Rate, Spectral Roll-Off, Spectral Centroid, Spectral Flux, Pitch Spectral autocorrelation function (ACF), and Pitch Spectral Harmonic Product Spectrum (HPS). For example, according to this arrangement, the analysis tool 100 can consider mfcc's (mel-frequency cepstrum coefficients), at a time or times that correspond to a time at which one or more of the previously-recognised 'skills' words and phrases occurred, during the clip. As the skilled person will be aware, mfcc's are coefficients that make up a mel-frequency cepstrum, which is a representation of the short-term power spectrum of a sound, on a nonlinear 'mel' frequency scale. Again, as the skilled reader will be aware, a normal cepstrum' is a spectral representation of an audio wave, on a linear scale, whereas in a 'mel cepstrum' the frequency bands are equally spaced on the mel scale, which approximates the human auditory system's response more closely than the linearly-spaced frequency bands of the 'normal' cepstrum do.

Other examples of technical characteristics of the speech (or of measurements that represent technical characteristics of the speech) that may be considered, for evaluating skills, include: chroma, tonnetz, root mean square (RMS), zero crossing rate, bandwidth, OSC (octave based spectral contrast), octave-based modulation spectral contrast (OMSC), Daubechies wavelet coefficients histogram (DWCH), modulation spectral flatness measure (MSFM), and modulation spectral crest measure (MSCM). As the skilled reader will recognise; chroma is a representation in which the entire spectrum is projected onto 12 bins representing the 12 traditional pitch classes. As the skilled reader will also recognise; tonnetz estimates tonal centroids as coordinates in a six-dimensional interval space.

In this second evaluation method, the analysis tool 100 looks at the temporal relationships between the occurrence of 'skills', and optionally also of 'assessment keywords', within a written representation of a speaker's speech, and a range of different technical characteristics of the audible representation of that speech. The analysis tool 100 is pre-configured (during its learning phase) to know what a particular change, or level, or relative level of a particular audio characteristic may mean, with respect to the words that are being said at a corresponding time. Therefore it can perform an evaluation as to the level or extent of a skill, which the speaker has mentioned, based on one or more audio characteristics at a corresponding time.

The 'corresponding time' in this context may be, for example, just before, and/or just after, and/or during the occurrence of a 'skill' or 'assessment keyword' being spoken. For example, the analysis tool 100 may be pre-configured (during the learning phase) to know that a person may be inclined to emphasize, or draw attention to, a skill by increasing the volume of his or her speech at some specific parts of the speech (i.e. just before saying the skill). Another possible tactic for a speaker drawing attention to a skill is to take a short pause before saying the skill. Using these and other teachings, a neural network is trained (during the learning phase) with the sound features of the speech, which enable the analysis tool 100 to subsequently differentiate the skill levels when it analyses previously unseen clips, during operation.

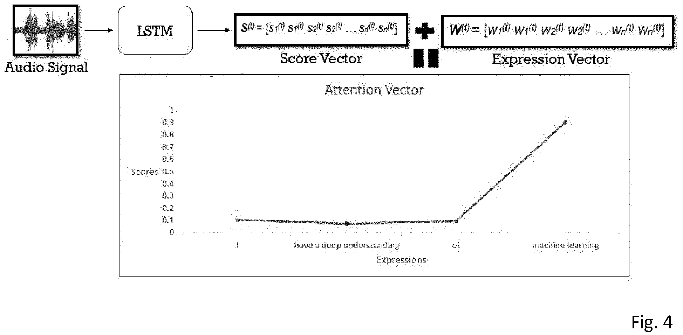

This second evaluation method, as carried out according to the present arrangement, may be further understood in relation to Figure 4. The method creates a so-called 'attention vector', based on a correspondence between the audio signal from a clip (represented by a 'score vector', discussed further below) and the word and phrases within the transcript of the clip (represented by an 'expression vector', discussed further below). The attention vector shows how much attention is given to each word/phrase (or 'subset') within the transcript. Then, according to how much attention has been given to it, an assessment is made on the level of a skill that has been mentioned in a subset of the transcript, with which that attention vector is associated. Generally speaking, if a skill is given more attention by the speaker, this means they are deemed to have a better knowledge of that skill (or possess that skill to a greater extent)

In the example shown in Figure 4, an LSTM based network, comprised within the analysis tool 100, takes a clip's audio features as an input and creates a so-called 'score vector' as an output, based on one or more characteristics of the audio signal, and by referring to pre-stored data and/or pre-stored rules for that/those audio characteristic(s). In this arrangement, the analysis tool 100 looks at multiple audio characteristics (e.g. volume, pitch, and so on) and assigns a score to each time interval of the transcript (i.e. every 5ms) based on pre-stored rules for the audio characteristics. The resulting score vector **S***^{(t)}* has multiple different values, at regular time intervals throughout the course of the audio signal. The regular time intervals in this arrangement are every 5ms, but it will be appreciated that other regular time intervals may be used.

The score vector **S***^{(t)}* is subsequently related to the written transcript of the speech, to see how the audio scores correspond to the words that have been said. The transcript is divided up into subsets for that analysis, wherein the skills and the assessment keywords which were previously detected, during the above-described skills recognition process, are maintained as subsets, (i.e. are maintained as phrases, as opposed to being divided up into individual words). The subsets, and their positions within the transcript, are represented by an expression vector **W***^{(t)}*, as shown in Figure 4. Each subset of the transcript has a timestamp, which the analysis tool 100 obtains from the ASR tool(s), and the audio signal intrinsically has timestamps associated with it. The correlation between the score vector **S***^{(t)}* and the expression vector **W***^{(t)}*, is obtained by plotting subsets of the transcript against the scores, which share the same timestamp. An example of a resulting plot is shown in Figure 4. The combination of the score vector **S***^{(t)}* and the expression vector **W***^{(t)}*, results in an attention vector **A***^{(t)}*.

In the example shown in Figure 4, the sentence 'I have a deep understanding of machine learning' is divided into four subsets:
1. "have a deep understanding" which are classified as assessment keywords,
2. "machine learning" which is classified as a skill,
3. "I" which is a 'normal' word, and
4. "of" which is also a normal word.

As detailed above, the score vector **S***^{(t)}* for the audible sound of this sentence being spoken, during the speech that is under analysis by the tool 100, has scores assigned for time intervals (i.e. every 5ms), based on the audio characteristics of the sound, at those time intervals. The expression vector **W***^{(t)}*, on the other hand, comprises subsets of the transcript which are of interest (because they relate to skills and/or assessment keywords) and therefore need to be scored. These two vectors are combined in order to obtain the attention **A***^{(t)}* scores for each subset.

In this example sentence presented here, the subset comprising the words 'machine learning' has a high score, indicating that there is more attention to it. Therefore, the tool can discern that the speaker (i.e. the candidate who created the clip) has a relatively high level of competence, in relation to machine learning.

This approach to skills recognition and evaluation is intelligent and highly useful, and extracts much more data from an audio-visual clip than previous known approaches would do. It applies a consistent and logical approach to detect, for example, the natural emphasis in a speaker's voice. It uses factors such as the temporal location, extent and duration of that emphasis to make a determination about how it 'colours' or modifies the actual words spoken. This enables the analysis tool to output an evaluation on whether and to what extent the speaker does, for example, possess a skill that he or she has spoken about, and to rank or otherwise differentiate between different respective skills that a speaker purports to possess.

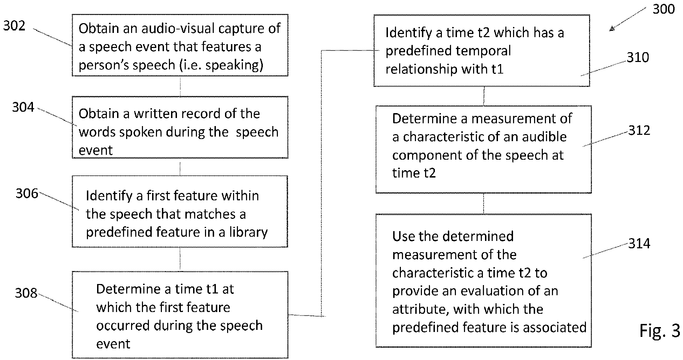

Figure 3 herein summarises a general method 300 that can be followed by the analysis tool, in order to provide the skills recognition and evaluation, for which a particular arrangement and examples are detailed above. As shown in figure 3, the general method 300 is not limited to recognising and evaluating 'skills' words. It can equally be applied to recognising other types of words or phrases, which are then matched with predefined words or phrases in a library. Those predefined words and phrases may have attributes associated with them, that are not related to skills or employment, but relate to any other area of interest or suitability for any other purpose. The method 300 may also be used to matching facial expressions to predefined facial expressions (to which a sentiment or meaning has been attached), from a library or database. Therefore an attention vector, or other output, could be created that combines a facial expression with an audio characteristic, to determine the meaning of that facial expression and/or the extent to which it could be relied upon or otherwise taken into account.

The general method 300 is summarised as follows:
At step 302, an audio-visual capture is obtained of a speech event that features a person's speech (i.e. a person speaking). It can be live speech or pre-recorded speech.
At step 304, a written record is obtained of the words spoken during the speech event. ASR can be used to obtain the written record, but other approaches are also possible, such as manual transcription. This may be an optional step, in some arrangements, because in some arrangements the tool may be configured to look at captured facial expressions, as opposed to spoken words.
At step 306, a first feature (which may be a word or phrase or a facial expression) which occurred during the speech - for example as shown in the written words or in the captured visual images - is identified as matching a predefined feature in a library. In the particular example which has been discussed in detail herein the first feature comprises a 'skills' word but the method is not limited to skills words. In some arrangements, other types of words or phrases will be identified. In some arrangements, facial expressions will be identified.
At step 308, a time t₁ is identified, during the speech event, at which the first feature occurred.
At step 310, a time t₂ is identified, wherein t₂ has a predefined temporal relationship with t₁. The predefined temporal relationship between t₁ and t₂ may depend on, for example, the nature of the speech and on what the tool is seeking to evaluate. The times t₁ and t₂ may be the same as one another, or one may occur just before or just after the other. It is possible that t₂ will comprise more than one time - for example, one or more times before and/or during and/or after the first feature occurs, may be taken into account.
At step 312, a measurement of a (technical) characteristic of an audible component of the speech is determined, for time t₂. For example, the characteristic may be volume, pitch, frequency and so on.
At step 314, the determined measurement of the characteristic a time t₂ is used to provide an evaluation of an attribute, with which the predefined feature is associated. In the particular arrangement being discussed herein, that attribute is a 'skill' but the method is not limited to use for skills evaluation.

There may be additional steps in this method. For example, another feature (for example an assessment keyword) which occurs at a third time t₃ may also be considered, wherein its relative position to the first feature, and or the time t₃ of its occurrence relative to either t₁ and/or t₂ may be taken into consideration, when outputting an evaluation of an attribute, with which the predefined feature is associated.

Thus it can be seen that the analysis tool may be configured and used for recognising and evaluating any suitable attribute, with which a word or phrase or even a facial expression may be associated.

### Sentiment Analysis

Turning back to the particular arrangement shown in figure 1; the analysis tool 100 is configured, according to this arrangement, to also carry out a so-called 'sentiment analysis' with respect to the audio-visual recordings provided by individuals. In some arrangements, the sentiment analysis may be omitted. Or sentiment analysis may, in some arrangements, be carried out independently of skills recognition and evaluation. Sentiment analysis may also be referred to as 'speech scoring'.

According to this arrangement, sentimental analysis, or speech scoring, is done in two stages. These two stages have different respective purposes. In some arrangements, either of these two stages may be omitted. In this arrangement, the first stage produces scores for each word while second stage only produces a general evaluation of a speech as a whole. It can be useful for users to obtain both these outputs.

The first stage comprises 'scoring' an individual's speech (i.e. the words that he or she has said) in his or her clip on a word-by-word basis. For the first stage, the written text representing the individual's speech in the clip is obtained, as detailed above in relation to skills recognition. Then, the text is processed by removing stopwords, converting to all lower cases and getting lemmas. A word by word analysis is then done, by comparing the identified words to a pre-existing lexical database, that assigns sentiment scores to words. Any suitable lexical database may be used for this purpose. In this arrangement the analysis tool 100 is configured to refer to a known database called 'SentiWordNet', which is a lexical resource for opinion mining, which assigns three sentiment scores to words - positivity, negativity and objectivity. These can be mapped to a numerical representation such as +1, -1 and 0. When each word in the text has been assessed, relative to the lexical database, the individual word scores are added up to obtain the overall word score. The resulting score can be used to determine whether the overall speech, made by the individual, is positive, negative or objective (or it may be differentiated further, within those three broad categories.)

For the second stage of speech scoring, during the learning phase, an RNN model within the analysis tool 100 is trained on an existing dataset that is directed to sentiment analysis. For example, the analysis tool 100 in this arrangement is configured to use 'The Rotten Tomatoes Movie Review Kaggle Dataset', which is mentioned in the background section hereabove. During subsequent operation of the analysis tool 100, for analysing previously unseen clips, firstly, the words in the text representing a clip are mapped to numbers. Then, these numbers are inserted to the model and converted into word embeddings in an embedding layer. GloVe's pre-trained embeddings are used in this arrangement, but other embedding platforms may instead be used, in other arrangements. Following that, a bidirectional LSTM layer and an output layer is added. As a result of this model, a sentimental analysis on the whole speech is provided by the analysis tool 100, by classifying the speech as one of the following classes; positive, somewhat positive, neutral, somewhat negative and negative.

### Emotion Recognition from Video and Speech

The analysis tool 100, according to this arrangement, is also configured to perform emotion recognition from both video (visual) and speech (audio) aspects of the audio-visual recordings provided by individuals, as further detailed below. It is not necessary to carry out emotion recognition from video and speech, in all arrangements. This process may be omitted in some arrangements. In other arrangements, emotion recognition may be carried out independently of skills recognition and evaluation. Those options notwithstanding; the multi-layered approach adopted according to this arrangement, in which several different techniques are employed to extract information and make determinations about the same clip or set of clips, can be highly useful to the end user, and can ensure that those determinations are as reliable and consistent with one another as possible.

Turning first to emotion recognition from video aspects of the clips; the analysis tool 100 is configured to achieve facial expression recognition by considering spatio-temporal features of the video (visual) aspect of each clip, and their correspondence to perceived facial expressions (and their associated emotions). In this context, for this arrangement, considering 'spatio-temporal features' comprises how the spatial features of a speaker - that may comprise, for example, the aesthetic features or geometric representations of a speaker's face - change, over time. Therefore, the tool 100 not only attempts to identify facial expressions, and corresponding emotions, from individually isolated, static visual images, but also looks at temporal sequences of images, and considers how the changes in spatial features over time may correspond to a particular feature or emotion or state of being for the speaker.

In order to provide reliable facial expression recognition, the analysis tool 100 according to this arrangement employs a model comprising a two stream network. The first stream is configured for facial recognition using spatio-temporal appearance features and the second stream is configured for facial recognition using spatio-temporal geometric features. By way of example, a 'spatio-temporal appearance feature' may comprise how the aesthetic appearance of a speaker's face changes over time - for example, how his or her eyes move towards or away from one another, during speech. By way of example, a 'spatio-temporal geometric feature' may comprise the movements of the corner of the speaker's lips within a time range. The geometric features are based on a predetermined sequence of so-called 'landmark points' (on a face), and the distances between them. Landmark points may include, for example, facial features such as the corners of lips, corners of eyes, peak of nose, and so on.

However, it will be appreciated that, before the analysis tool 100 can be used to carry out facial expression recognition with respect to a previously-unseen video clip, that model must be first created and calibrated, during its learning phase. An aim of the model creation/calibration process, for this arrangement, is for the analysis tool 100 to learn a robust model(s) for emotion recognition, from multiple audio-visual emotion databases, in which emotion recognition is not based on a single, static image but is instead based on a temporal flow of image data, over a predetermined period of time.

As the skilled reader will be aware, there is a large amount of known face data available, in known databases, for various face analysis tasks, in which static images are labelled for emotions. However these known databases do not generally consider video frames (i,e, moving images), but instead apply emotion labels to fixed or static visual images. Therefore, during its learning phase, the analysis tool 100 learns the connection between facial appearances or expressions, which are moving or 'temporal', and corresponding emotions. The learning is based on databases in in which frames that show a peak of an emotion are labelled with the corresponding emotions.

As part of the learning phase for the analysis tool 100, known video images are input into the model, to enable the model to 'learn' how to translate labels for static images (i.e. for individual frames) to labels for video images. As mentioned above, the labels in known audio-visual emotion databases are generally assigned to frames that show a peak of an emotion. In order for the present model to learn/decide on a label for a temporal (i.e. moving) sequence of frames, the peak of a particular emotion is detected within the video, based on the known database information, and the temporal sequence for that emotion is then defined as a window of a predefined number of frames (for example, +/-10 frames) before and/or after the peak. Therefore the model learns the changes that typically occur before and/or after the peak of an emotion occurs.

For example, if the emotion for which a peak is detected within a video (during the learning phase) is 'happy', the temporal sequence for 'happy' is defined as starting at, for example, 10 frames before the 'happy' peak. In this arrangement, the model defaults to labelling the emotion for each frame as 'neutral', until or unless a peak of emotion is detected for that frame. Therefore, the 'happy' temporal sequence will show how the speaker transitions from 'neutral' to 'happy' (and optionally also how he or she transitions form 'happy' back to being 'neutral, after the peak.) Thus, the model learns a temporal sequence in which the user transitions from a neutral state (or emotion) to a happy state (or emotion). It will then be able to use that learning, to recognise a 'happy' temporal sequence, during its operation phase for analysing previously unseen video clips.

As mentioned above, a two-stream visual emotion recognition model is adopted. The first visual emotion recognition stream is configured to learn spatio-temporal appearance features with a three-dimensional convolution neural network (3D CNN). This first stream is configured to take a fixed sequence of face images as its input. The second visual emotion recognition stream is configured to learn spatio-temporal geometric features with fully connected hidden layers. The second stream is configured take a fixed sequence of so-called 'landmark points' (on a face) as its input. The learning of the second stream is based on how the distances between facial features change, over time. The parameters of the two streams are, during the learning phase of the analysis tool, in this arrangement, estimated in an unsupervised and semi-supervised framework with a variational autoencoder (VAE).

In this arrangement, each of the two streams is trained (i.e. undergoes learning) separately, independently of the respective other one. In some other arrangements, there may be just one stream or two streams may learn together, to create a model.

The emotions that the model learns in this arrangement can include, for example: happy (or happiness), sad, fear, disgust, anger and neutral. There may also be others, for example confident, excited, unsure, and so on. What is learnt depends, in part, on the labels employed in the known databases, on which the learning is based. Different levels of the emotions may also be learnt. For example, the levels may include low, medium, high and unspecified.

In operation, after the learning phase is complete for both streams of the model, the analysis tool 100 will input the visual (and optionally also the audio) stream from a previously unseen video clip, which is to be analysed, into the model. The model will use its learnings as discussed above, to provide one or more outputs that comprises an emotion recognition and/or an emotional analysis for the clip.

As mentioned above, in this arrangement, each speaker who makes the clips is instructed, at the outset, to face the camera and have his or her whole face on show, during the recording. This makes it easier for the analysis tool to apply its emotion recognition techniques, and provides for a fairer, more even analysis of different respective clips.

In this arrangement, during operation of the analysis tool 100, emotion recognition and labelling can be carried out by both streams - based on spatio-temporal appearance features and base don spatio-temporal geometric features. Both streams can output corresponding emotion recognitions, and both may label the emotions that it detects at one or more times during the video clip with corresponding levels. The emotion recognitions may be time stamped, so that they can be correlated with emotion recognition based on audio data, detailed below, and/or correlated with other recognitions or detections that the analysis tool 100 makes.

In the present arrangement, the architecture of the first (spatio-temporal appearance) stream comprises 5 convolutional layers; each followed by a non-linear activation function (ReLU) and a max pooling layer. The kernel size of the entire convolutional layer is a 3x3x3 window. For the pooling layer, it is 3x3x3 with a stride of 2. The number of output channels are 64, 128, 256, *512, 512.* After the convolutions layers there is a single fully connected layer of dimension 4096. This is followed by a *softmax* layer, for classification. As will be known to the skilled reader, softmax is a mathematical function that is often used in neural networks, to map the non-normalized output of a network (or stream) to a probability distribution over predicted output classes. However, it will be appreciated that other architectures may be used for the first (spatio-temporal appearance) stream of the model.

In the present arrangement, the second (spatio-temporal geometric) stream takes trajectories of landmark points (on a human face) from a database of known images, which are labelled with corresponding emotions or perceived facial expression, as inputs, to learn geometric spatio-temporal features. These trajectories can be considered as one dimensional signals and defined as:
***P**^{(t)}* = [*p₁^{(t)} q₁^{(t)} p₂^{(t)} q₂^{(t)}* ... *pₙ^{(t)} qₙ^{(t)}*] where n is the total number of landmark points in frame *t* and ***P***^{(t)} is a 2n dimensional vector at *t. pₖ*^{(t)} and *qₖ*^{(t)} are the coordinates of the *k*^{th} facial landmark points at frame *t.* These coordinates must first be normalised, for input into the stream. For the normalisation of the coordinates, the coordinates of the nose position on an image are subtracted from the coordinates of each of the other landmark points on the image. Then, each coordinate is divided by the standard deviation of the *pq*-coordinates. This is done individually for each frame, within the audio-visual clip. The normalised points are then concatenated for a fixed number of sampled frames. Such normalisation happens both during the learning phase and subsequently during the operation phase, when the tool 100 is analysis previously unseen clips.

The second 'geometric' stream receives the concatenated landmark points as input. For this second 'geometric' stream, two hidden layers and the top layer are utilised as the *softmax* layer. Furthermore, another feature is computed, which is the distance between all the landmark points without the normalization. The distances computed for each frame are concatenated into a single one dimensional vector for a fixed number of frames. This is the input to the stream, which has three hidden layers and a *softmax* layer for classification. However, it will be appreciated that other architectures may be used for the second (spatio-temporal geometric) stream of the model.

In addition to the above-described video-based facial expression (and corresponding emotion) recognition, the analysis tool 100 herein is also configured to use audio signals for emotion recognition. However, in some arrangements, the audio signal may not also be considered for emotion recognition. In this arrangement, the analysis tool 100 is trained, during its learning phase, using the aforementioned CREMA-D dataset, in which known audio signals (comprising various speakers saying a selection of sentences) are labelled with different emotions and emotion levels. In this arrangement, this dataset is input into the model, to enable it to determine robust statistical relationships between types of audio signal (having particular characteristics) and corresponding emotions. When the analysis tool 100 is subsequently in operation mode, for analysing previously-unseen audio-visual clips, the model will enable it to output perceived emotions based both on the visual content (as described above) and on the audio content of the clips.

Thus, a unique and highly useful model is created, which can subsequently be used by the analysis tool 100, when it is in its operation phase, to recognise facial expressions from moving video images, and assign emotions to them. The model is highly advantageous and nuanced because:
1. It uses spatio-temporal features, i.e. it considers the way features change over time, not just static images or 'snapshots';
2. It considers both spatio-temporal geometric features and spatio-temporal appearance features and fuses them, to produce an overall output on perceived emotion, based on visual features of a speaker over a pre-determined time range or pre-determined number of frames in a temporal sequence;
3. It also considers audio inputs, for recognising or assigning emotions to a speech.
4. It can combine the outputs of emotional analysis, as provided by both visual spatio-temporal streams and the audio stream of the model, in order to provide an overall emotional recognition (or analysis) output.

The analysis tool 100 can be configured to provide a plurality of emotional outputs, relating to different respective periods of time during the course of a clip. It may also be configured to provide an overall emotional analysis for the clip, based on a combination of multiple individual emotional outputs, during the clip. The outputs may include labels for emotions and optionally also their corresponding levels.

### Additional Processes Carried Out by the Analysis Tool

The analysis tool 100 in this arrangement is configured for performing a number of additional processes, to contribute to the overall analysis of audio-visual clips submitted by multiple individuals. However, a user or controller of the analysis tool 100 may choose to omit some or all of these additional processes, during operation of the analysis tool. Moreover, in some arrangements, the analysis tool will not be configured to perform some or all of these additional processes.

A first additional process, that the analysis tool 100 is configured for performing, is age estimation. It will be appreciated that in some cases this process will not be deemed necessary, by the user or by the person instructing the user.

As a first step in the age estimation process, a face detection and histogram equalization are applied, to ensure that all the images of faces from various clips are directly comparable with one another. During face detection phase, firstly faces are detected and cropped. Then all the faces are aligned and passed to the histogram equalization. Histogram equalization is aimed to reduce light effects on the images. The images are then input into two CNN models, which are known for age estimation. Any suitable such models may be used but, in this arrangement, two models known as 'AlexNet' and 'VGG16' are used. Both models are trained using finetuning of the values from another trained network, instead of initialising their parameters randomly. Both models output an age estimation for each clip/individual. The final age estimation is output, for each clip/individual, by the analysis tool 100 as a by weighted sum of the outputs of two models.

The analysis tool 100 may also make an estimation on gender, for example also using the 'VGG16' trained model. Again, it will be appreciated that in some cases this process will not be deemed necessary, by the user or by the person instructing the user.

The analysis tool 100 may also carry out personality trait analysis, based on a combination of audio, video and natural language processing components.

The analysis tool 100 may also be configured to carry out person identification. During this process, a live video and/or audio data is fed into the analysis tool 100, wherein that video or audio features the person who is to be identified. Facial features and/or speech features are extracted from the video or audio. Then, those extracted features are compared with the features of previously-provided videos of candidates. A matching is done between the person from the input data and the previously-provided videos of the candidates. If a positive match is identified, the person can be identified, based on identification data that was stored for the previously-provided video. This approach can also be employed for person verification, to check that a person who attends an interview or meeting is the person that previously provided a CV or other data.

Hence it will be appreciated that a highly useful analysis tool is provided herein. The tool can provide recognition, detection and evaluation of skills and attributes, which a speaker discusses during a speech event, in a scalable and user-friendly manner. The tool can also provide recognition of emotion, or state of mind, for the speaker, which may comprise a level of extent of the emotion. The outputs can be utilised by the user (or by a third party, in receipt of the outputs from the user of the analysis tool) to make determinations and decisions in relation to the audio-visual clips that have been analysed, and the individuals who feature in them, wherein that user (or third party) knows that consistent, logical processes have been employed by the analysis tool, to reach its outputs. Therefore the burden on the user to manually process all of the clips, from scratch, is greatly reduced. A particular arrangement has been described herein in which the audio-visual clips comprise CV's, and the words that are matched to words in a prestored library relate to professional skills or qualifications. However it will be appreciated that the approaches described herein could be applied equally for speech that relates to other topics and the outputs could be used for other respective purposes.

For example, the analysis tool could be used to match individuals to one another, by determining shared or similar interests. For example, the analysis tool could be used to suggest particular activities or holiday locations or products to an individual, based on their preferences, as determined by the analysis tool.

For example, the analysis tool may be used for medical purposes. For example, the tool may be configured, and trained accordingly, to determine the level of depression and/or other mental health conditions by analysing the words used by the patient and emotional state of the patient.

For example, the analysis tool may be used for security purposes such as police interrogation, VISA check, and border security. For example, at the border security, it may be configured to pinpoint individuals who are in an unusual emotional state or who appear not to be telling the truth or who use some marked words.

For example, the analysis tool may be used for verification and personality analysis at venues such as bank in order to verify the candidate, as well as measuring levels of customer satisfaction.

According to an arrangement, the analysis tool may be used to process more than one recording per individual. For example, the individual may be asked to submit more than one recording of him or herself presenting an audio-visual CV, wherein each recording would be analysed separately. The outputs of the two or more analyses may be compared to one another, for example to even out any effects of nervousness or accidental mistakes, on the characteristics of the speaker's voice during a single recording.

The terms used in the present description such as 'analysis tool', 'skills' 'keywords' 'sentiment analysis' and so on are intended to be illustrated and not to be limiting.

It is to be understood that the above description is intended to be illustrative, and not restrictive. Many other implementations will be apparent to those of skill in the art upon reading and understanding the above description. Although the present disclosure has been described with reference to specific example implementations, it will be recognised that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method for processing speech data for a speech event, wherein the speech data comprises a visible component and an audible component; the method comprising:
identifying a first visible feature within the visible component that corresponds to a predetermined visible speech feature;
determining a first time (t₁) corresponding to the occurrence of the first visible feature, during the speech event;
determining a measurement of a characteristic of the audible component, at a second time (t₂), during the speech event, which has a pre-defined temporal relationship to the first time (t₁) at which the first visible feature occurred; and
using the determined measurement of a characteristic at the second time (t₂), to output an evaluation of an attribute, with which the predetermined visible speech feature is associated.

2. The method of claim 1 wherein the speech event comprises either live speech, or a recording of speech.

3. The method of claim 1 or claim 2 wherein the speech data further comprises characteristic data that comprises information relating to one or more characteristics of a visible component and/or of an audible component of the speech data.

4. The method of claim 3 wherein the characteristics of an audible component includes any of: volume, pitch (i.e. frequency), speed, length of pauses (i.e. the absence of speech) between words, tonnetz, ferments, Mel Frequency Cepstral Coefficients, Energy Entropy, Short Time Energy, Zero-Crossing Rate, Spectral Roll-Off, Spectral Centroid, Spectral Flux, Pitch Spectral autocorrelation function (ACF), and Pitch Spectral Harmonic Product Spectrum (HPS).

5. The method of any preceding claim wherein the first visible feature within the visible component comprises a written word or phrase, or part of a word or phrase, that was spoken during the speech event.

6. The method of any preceding claim wherein the first visible feature within the visible component may comprise a facial expression, that is or has been captured, during the speech event.

7. The method of any preceding claim wherein, in order to correspond to the predetermined visible feature, the first visible feature has to match the predetermined visible feature exactly, or to within a predetermined degree of tolerance or error.

8. The method of any preceding claim, the method further comprising:
identifying a second visible feature within the visible component; wherein the second visible feature corresponds to a predetermined visible speech feature, which may be different to the predetermined visible speech feature to which the first visible feature corresponds, and identifying a time t₃ at which the second visible feature occurs, during the speech event.

9. The method of any preceding claim wherein the predefined temporal relationship dictates that the first time (t₁) is equal to the second time (t₂).

10. The method of any of claims 1 to 8 wherein the predefined temporal relationship dictates that there is a predetermined time difference between t₁ and t₂.

11. The method of any of claims 1 to 8 further comprising the step of selecting which characteristic of the audible component, from a plurality of characteristics, to determine a measurement of; wherein the nature of the predefined temporal relationship between the first time (t₁) and the second time (t₂) is dependent on which characteristic is selected.

12. The method of any of claims 1 to 11 wherein said method is a computer-implemented method.

13. A computer program comprising instructions which, when executed by data processing apparatus, causes the apparatus to perform a method according to any of claims 1 to 12.

14. A computer readable medium storing a computer program according to claim 13.

15. A data processing tool comprising a control unit and a memory;
wherein the control unit is configured to process speech data for a speech event, wherein the speech data comprises a visible component and an audible component; the control unit further being configured to:
identify a first visible feature within the visible component that corresponds to a predetermined visible speech feature;
determine a first time (t₁) corresponding to the occurrence of the first visible feature, during the speech event;
determine a measurement of a characteristic of the audible component, at a second time (t₂), during the speech event, which has a pre-defined temporal relationship to the first time (t₁) at which the first visible feature occurred; and
use the determined measurement of a characteristic at the second time (t₂), to output an evaluation of an attribute, with which the predetermined visible speech feature is associated.
